# EUROPÄISCHE PATENTSCHRIFT

(11) **EP 2 461 130 B1**
(45) Veröffentlichungstag und Bekanntmachung des Hinweises auf die Patenterteilung: **05.04.2017**
(21) Anmeldenummer: 11009416.6
(22) Anmeldetag: 29.11.2011
(51) Int. Cl.: G01B 7/00, G01B 7/13

(54) **Vorrichtung zur Überprüfung der Maße eines mechanischen Werkstückes**
Device for checking the dimensions of a mechanical workpiece
Dispositif de contrôle des dimensions d'une pièce usinée mécanique

(30) Priorität: 03.12.2010 DE 202010016201 U
(43) Veröffentlichungstag der Anmeldung: 06.06.2012
(73) Patentinhaber: Horst Knäbel GmbH, 40667 Meerbusch (DE)
(72) Erfinder: Knäbel, Horst, Dipl.-Ing., 40667 Meerbusch (DE)
(74) Vertreter: Wagner Albiger & Partner Patentanwälte mbB

(56) Entgegenhaltungen:
- EP-A1- 0 470 397
- US-A1- 2006 179 674

## Beschreibung

Die Erfindung bezieht sich auf eine Vorrichtung zur Überprüfung der Maße eines mechanischen Werkstückes, bestehend aus einem einbaubaren und zwei mit Abstand voneinander angeordnete Induktionsspulen aufnehmenden Grundkörper und einem bewegbaren und mit einem sich auf der zu messenden Oberfläche anlegbaren Tastelement sowie mit zwei den Induktionsspulen zugeordneten Ablenkkörpern bestückten Messglied.

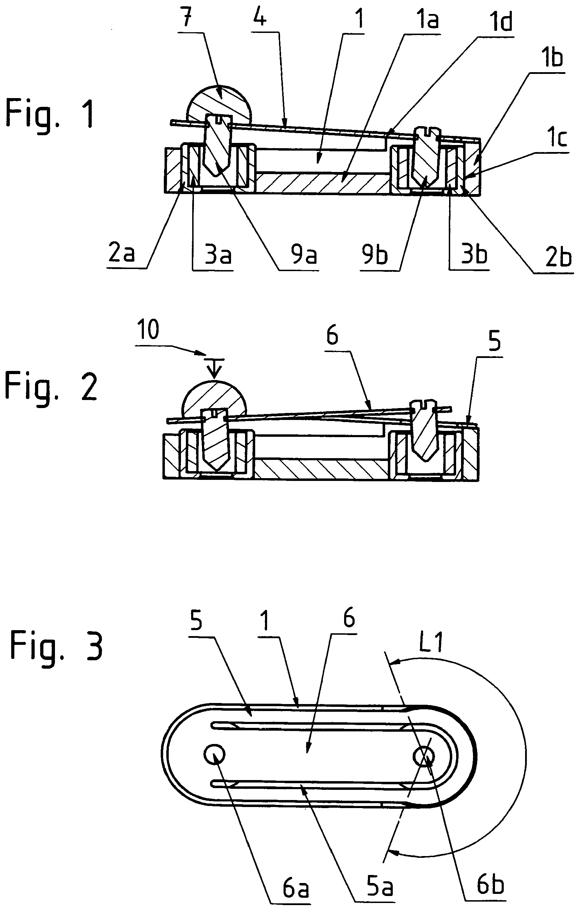

Aus der veröffentlichten europäischen Patentanmeldung 0 470 397 ist eine Messvorrichtung bekannt, bei der das Messglied gemäß dem Ausführungsbeispiel der Figur 2 als zweischenkliges, über ein rechtwinklig zum Messglied stehendes Federgelenk gelagerte Wippe ausgebildet ist, die beidseitig mit einem als Spulenkern ausgebildeten Ablenkkörper bestückt ist und die einseitig ein Tastelement trägt. Die als Ablenkkörper wirkenden Spulenkerne ragen berührungslos und damit reib- und hysteresefrei in zwei Induktionsspulen, die in einem Grundkörper eingesetzt sind, und erzeugen so eine wegabhängige Impedanzänderung. Die gegenläufige Impedanzänderungen beider Induktionsspulen werden erfasst und über eine Messelektronik ausgewertet, so dass daraus ein dem Messweg entsprechendes Signal als Messgröße zur Verfügung gestellt wird. Diese an sich sehr klein bauenden Vorrichtungen haben aber den Nachteil, dass ihre Abmessungen und ihre Montagemöglichkeiten weitgehend durch das mittig anzuordnende Federgelenk bestimmt werden und dass der Impedanzverlauf beider Induktionsspulen nicht beeinflusst bzw. linerarisiert werden kann.

Diese bekannten Vorrichtungen werden vorzugsweise über seitlich anlegbare Klemmschrauben in den der Messaufgabe entsprechend ausgelegten Geräteträgern gehalten und positioniert. Das führt dazu, dass die Ausgestaltung und Herstellung der Geräteträger sehr aufwendig und teuer ist. Auch ist es kaum möglich, derartige Vorrichtung so einzuhausen, dass sie weitgehend schmutzunempfindlich einsetzbar sind.

Bezüglich des Impedanzabgleichs besteht nur in einer Position, beispielsweise der Nullposition, die Möglichkeit die Impedanz beider Induktionsspulen durch Veränderung der Eintauchtiefe mindestens eines Ablenkkörpers - beispielsweise durch das Einsetzen des Ablenkkörpers über Gewinde in die als Messglied dienende Wippe - auf den gleichen Wert zu bringen, nicht aber den Impedanzverlauf über den vollen Messweg zu egalisieren. Dies hat einen nicht beeinflussbaren Linearitätsverlauf und eine nicht beeinflussbare Linearitätsabweichung zur Folge. Des weiteren ist es nicht möglich das Tastelement auszuwechseln bzw. es durch ein andersartiges zu ersetzen.

Der Erfindung liegt nun die Aufgabe zugrunde, eine Vorrichtung zur Überprüfung der Maße eines mechanischen Werkstückes zu schaffen, die einen einfachen Aufbau besitzt, kostengünstig hergestellt werden kann, sehr klein baut und sich leicht und einfach in alle denkbaren Geräteträger einbauen lässt. Darüber hinaus soll die Vorrichtung schmutzunempfindlich und verschlossen aufbaubar und mit einem leicht auswechselbaren Tastelement bestückbar sein. Des weiteren soll das Messsignal einer solchen Vorrichtung auch bei den nicht zu vermeidenden Impedanzunterschieden beider Spulensysteme durch eine einfache, mechanische Einstellung weitgehend liniearisierbar sein.

Zur Lösung dieser Aufgabe wird gemäß Erfindung bei einer Vorrichtung der eingangs beschriebenen Gattung vorgeschlagen, dass das Messglied als eine sich über die beiden Induktionsspulen des Grundkörpers erstreckende und die beiden Spulenkerne tragende Zunge ausgebildet ist, die einseitig mit einer sich gleichfalls über den Grundkörper erstreckenden und mit dem anderen Ende am Grundkörper befestigten Blattfeder verbunden ist.

Eine so ausgelegte Vorrichtung zur Überprüfung der Maße eines mechanischen Werkstückes baut sehr klein, besitzt einen äußerst einfachen Aufbau, ist kostengünstig herzustellen und lässt sich leicht und einfach in alle denkbaren Geräteträger einbauen.

Weitere Merkmale einer Vorrichtung gemäß der Erfindung sind in den Ansprüchen 2 bis 10 offenbart.

Die Erfindung sowie weitere Vorteile derselben werden nachfolgend anhand in einer Zeichnung dargestellter Ausführungsbeispiele näher erläutert. Dabei zeigen
- Figur 1: einen Längsschnitt durch eine Vorrichtung gemäß der Erfindung in ihrer Grundstellung,
- Figur 2: die Vorrichtung der Figur 1 in ihrer Messstellung,
- Figur 3: eine Draufsicht auf die Blattfeder mit Zunge des Messgliedes der Figuren 1 und 2,
- Figur 4: eine andere Ausgestaltung einer erfindungsgemäßen Vorrichtung mit einem Gehäuse,
- Figur 5: eine Draufsicht auf die Blattfeder mit Zunge des Messgliedes der Figur 4 mit einem unter der Blattfeder liegenden Justierblech,
- Figur 6: ein Schnitt durch ein Klemmstück zur Befestigung der Vorrichtung auf einen Geräteträger.
- Figur 7: eine Draufsicht auf die dem Grundkörper zugewandte Seite des Klemmstücks,
- Figur 8: ein weiteres Ausführungsbeispiel einer erfindungsgemäßen Vorrichtung mit einem über einen Stößel in einer Buchse geführten Tastelement,
- Figur 9: die Unterseite der Blattfeder mit Zunge des Messgliedes der Fig. 8 mit einer auf die Zunge aufgesetzten Zungenleiste,
- Figur 10: ein weiteres Ausführungsbeispiel einer erfindungsgemäßen Vorrichtung mit einer als abgesetzten Leiste ausgebildeten Zunge,
- Figur 11: eine sehr klein bauende Messvorrichtung dieser Erfindung in einem zu messenden Werkstück, dargestellt als Einzelheit einer nicht sichtbaren Schnittzeichnung,
- Figur 12: eine Draufsicht auf die Blattfeder mit Zunge des Messgliedes der Fig. 11.

In den Figuren 1 und 2 der Zeichnung ist der prinzipielle Aufbau einer Vorrichtung zur Überprüfung der Maße eines mechanischen Werkstückes zu sehen, die zunächst aus einem tragenden Grundkörper 1, beispielsweise aus einem nichtmagnetischen Werkstoff, besteht und der, von oben gesehen, eine längliche, an den Enden abgerundete Form entsprechend der Figur 3 besitzt. Der Grundkörper 1 weist einen Boden 1a auf, an den sich ein erhöhter, umlaufender Rand 1b anschließt. In den Endbereichen des Bodens 1a ist jeweils eine, sich an den inneren Rand 1b anschließende, kreisförmige Aussparung 1c vorgesehen, in die jeweils ein aus magnetischem Material gefertigter Spulenkörper 2a, 2b mit je einer Induktionsspule 3a, 3b eingesetzt ist.

Der Grundkörper 1 wird zumindest weitgehend von einem Messglied 4 gemäß der Figur 3 abgedeckt, welches aus einer Blattfeder 5 mit der durch eine schmale hufeisenähnliche Ausnehmung 5a herausgearbeiteten Zunge 6 gebildet ist. Die Blattfeder 5 ist in ihrem Einspannbereich, in den Figuren 1 und 2 der Zeichnung ist es die rechte Seite der Blattfeder 5, über eine Bogenlänge L1, beispielsweise durch Schweißung, Klebung oder eine mechanische Befestigung, mit dem oberen Bereich des Randes 1b fest verbunden. An ihrem freien, also an dem dem Einspannbereich gegenüberliegenden Ende trägt die Blattfeder 5 ein hier halbkugelförmig ausgebildetes Tastelement 7. Aus den Figuren 1 und 2 ist zu ersehen, dass die Blattfeder 5, gegenüber dem Boden 1a des Grundkörpers 1 leicht schräg steht. Diese Ausgangslage der Blattfeder 5 sollte so bemessen sein, dass die Blattfeder 5 nach halbem Federweg an ihrem freien Ende eine horizontale Lage einnimmt. Diese Lage kann beispielsweise dadurch erreicht werden, dass der obere Bereich des umlaufendes Randes 1b, in dem die Blattfeder 5 mit dem Grundkörper 1 verbunden ist, bis zu einer Endkante 1d schräg verläuft, so dass zwischen dem übrigen Bereich des Randes 1b und der Blattfeder 5 ein ausreichender Freiraum entsteht.

Die Blattfeder 5 und die, in diesem Fall einstückig mit ihr verbundene Zunge 6 sind mit Öffnungen 6a, 6b versehen, die zur Aufnahme der als Ablenkkörper wirkenden Spulenkerne 9a, 9b dient und die sich deshalb genau symmetrisch jeweils über einem Spulenkörper 2a,2b mit einer Induktionsspule 3a,3b befinden. Es ist vorteilhaft, wenn die Öffnungen 6a, 6b ein Innengewinde und die Spulenkerne 9a, 9b ein Aussengewinde besitzen. Dies erleichtert die Montage und dient der Positionierung der Spulenkerne 9a, 9b für den Nullabgleich der Vorrichtung.

In der Figur 1 der Zeichnung ist die Vorrichtung in ihrer Grundstellung dargestellt. Die Blattfeder 5, die Zunge 6 und die mit ihr verbundenen Spulenkerne 9a,9b sowie das Tastelement 7 befinden sich in ihrer Ausgangsposition.

Bei einem Messvorgang wird das Tastelement 7 aus dieser Ausgangsposition in Richtung des Pfeiles 10 verdrängt. Dies hat zur Folge, dass sich die Blattfeder 5 verbiegt und die Zunge 6 sich entsprechend dem dabei am freien Ende der Blattfeder 5 ergebenen Winkel aufrichtet. Damit verändert sich zwangsläufig auch die Lage der Spulenkerne 9a, 9b in den Induktionsspulen 3a, 3b. Während der in Folge der Schrägstellung der Blattfeder 5 zuvor weiter herausstehende Spulenkern 9a nun tiefer in die Induktionsspule 3a eintaucht, wird der zuvor tiefer in der Induktionsspule 3b eingetauchte Spulenkern 9b durch das Aufrichten der Zunge 6 dementsprechend herausgezogen.

Durch eine an die Induktionsspulen 3a,3b angelegte Spannung kann die sich durch die Wegänderung der Spulenkerne 9a, 9b ergebende Impedanzänderung über eine Messbrücke ermittelt, in einen Messverstärker aufbereitet und als Messsignal ausgewertet und weiter verarbeitet werden.

Durch eine weiter unten beschriebene Einstellmöglichkeit kann die Auflagelänge der Blattfeder 5 auf dem Rand 1b beeinflusst werden, so dass damit die Biegelinie der Blattfeder 5 verändert und infolgedessen die Impedanzen beider Spulensysteme in sinnvoller Weise aufeinander abgeglichen bzw. die Messvorrichtung damit weitgehend linearisiert werden kann.

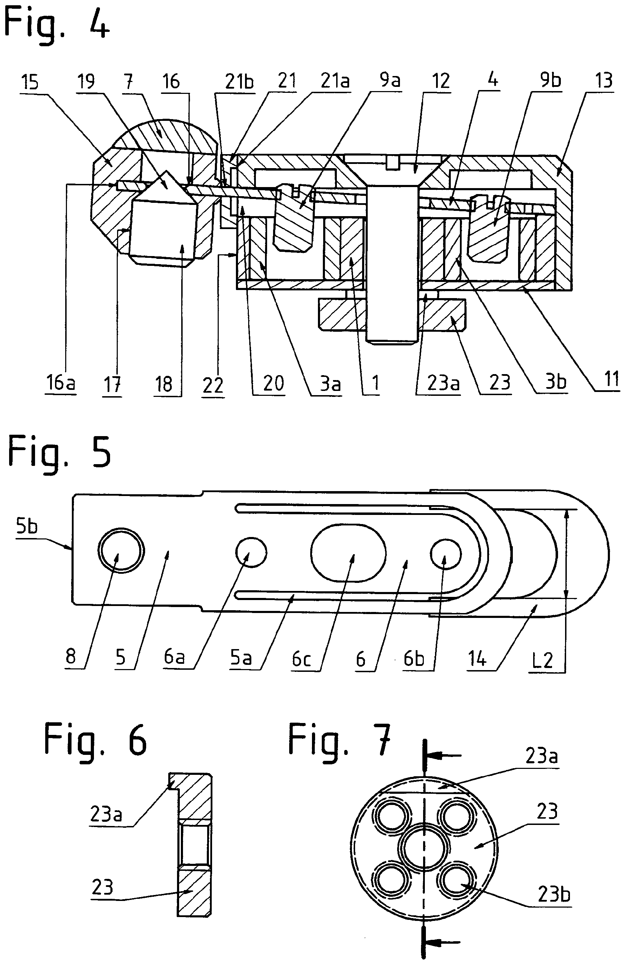

In der Figur 4 der Zeichnung ist eine Messvorrichtung zu sehen, die eine etwas andere Ausgestaltung als die Messvorrichtung der Figuren 1 und 2 aufweist. Hierbei wird der Boden 1a des Grundkörpers durch eine der magnetischen Abschirmung dienende, separate Bodenplatte 11 ersetzt. Der Grundkörper 1 ist hierbei ein aus einem magnetischen Werkstoff hergestellter Block, der zur Aufnahme der Induktionsspulen 3a, 3b, zur Fixierung der nicht dargestellten Anschlusskabel sowie zur Durchführung einer Befestigungsschraube 12 entsprechende Ausnehmungen aufweist und von einem aus einem nichtmagnetischem Werkstoff bestehenden Gehäuse 13 weitestgehend umschlossen wird. Damit übernimmt der Grundkörper 1 in Figur 4 gemeinsam mit der Bodenplatte 11 zusätzlich die Aufgabe der magnetischen Abschirmung der Induktionsspulen 3a, 3b, die bei der Vorrichtung gemäß Fig. 1 und 2 von den Spulenkörpern 2a, 2b übernommen wird. Somit können bei der Ausführung nach Fig. 4 die Spulenkörper 2 entfallen.

Das Messglied 4 der Fig. 4 ist länger als der Grundkörper 1 und ragt mit seinem freien Ende über den Grundkörper hinaus.

Wie in Fig. 5 dargestellt, weist die Blattfeder 5 außer der schmalen, hufeisenähnlichen Ausnehmung 5a zu Bildung der Zunge 6, die Öffnungen 6a, 6b für die Spulenkerne 9a, 9b, eine Öffnung 6c für den Durchlass der Befestigungsschraube 12 und eine als angesenkte Bohrung ausgeführte Öffnung 8 für die weiter unten beschriebene Positionierung des Tastelements 7 auf. Diese Blattfeder 5 wird zwar ähnlich wie in den Fig. 1 und Fig. 2 im Einspannbereich mit dem Grundkörper 1 fest verbunden, aber hierbei nur auf einer wesentlich kürzeren Länge L2. Außerhalb der Länge L2 ist der umlaufende Rand 1b des Grundkörpers 1 soweit abgearbeitet, dass zwischen den Grundkörper 1 und der Blattfeder 5 ein gabelförmiges Justierblech 14 geschoben und zur formschlüssigen Anlage gebracht werden kann, um die Auflagelänge der Blattfeder im ihrem Einspannbereich variieren zu können.

Über diese Auflagelänge kann, bei vorgegebener Durchbiegung der Blattfeder 5, die Schrägstellung der Blattfeder 5 an ihrem freien Ende und damit der Grad der Aufrichtung der Zunge 6 verändert werden. Damit ist es möglich, die Impedanzen beider Spulensysteme so aufeinander abzugleichen, dass damit auch Unterschiede bei der Herstellung der Induktionsspulen 3a, 3b, der Spulenkerne 9a, 9b oder der Signalführung ausgeglichen und zu Gunsten der Linearität verändert werden können. Dies kann dadurch geschehen, dass beispielsweise bei einer zu geringen Impedanz der Induktionsspule 3b durch ein sorgfältiges Herausziehen des Justierbleches 14 aus der Messvorrichtung, die Schrägstellung des freien Endes der Blattfeder 5 und damit die Schrägstellung der Zunge 6 sowie der Weg des Spulenkerns 9b abgesenkt und in Folge dessen die Impedanz der Induktionsspule 3b erhöht werden, ohne dass sich die Impedanz der Induktionsspule 3a nennenswert ändert. Wird in entgegengesetzter Weise verfahren, so ergibt sich eine entsprechende Reduzierung der Impedanz an der Induktionsspule 3b.

Nach dieser Einstellung werden die gabelförmigen Enden des Justierbleches 14 mit dem Grundkörper 1 und der Blattfeder 5 fest verbunden, und das aus dem Grundkörper 1 herausragende Teil des Justierbleches 14 wird abgetrennt. Das über den Grundkörper 1 herausragende freie Ende der Blattfeder 5 dient zur Aufnahme eines auswechselbaren Tastelementes 7, das über ein Zwischenstück 15 mit einer die Blattfeder 5 aufnehmenden schlitzförmigen Ausnehmung 16 versehen ist, die mit einer stirnseitigen Fläche 16a endet.

Das Zwischenstück 15 ist mit einer Gewindebohrung 17 ausgestattet, in die eine Klemmschraube 18 mit einer in die Bohrung 8 der Blattfeder 5 einführbaren Spitze 19 eingeschraubt ist. Wenn der Abstand der stirnseitigen Fläche 16a zur Gewindebohrung 17 ca. 0,1 bis 0,5 mm kleiner ist als der Abstand der Bohrung 8 zur Stirnfläche 5b der Blattfeder 5, so wird das Zwischenstück 15 mit dem Tastelement 7 beim Anziehen der Klemmschraube 18 vertikal und horizontal exakt und reproduzierbar fixiert.

Das in Fig. 4 als Kugelabschnitt ausgebildete Tastelement 7 kann aber auch als Rollenabschnitt, Kegel, Taststift und dgl. ausgeführt und mit einem dementsprechenden Zwischenstück 15 verbunden sein.

Das sich über den Grundkörper 1 erstreckende Gehäuse 13 schließt auf der dem Tastelement 7 zugewandten Seite bündig mit dem Grundkörper 1 ab, so dass nur noch ein geringer Spalt 20 verbleibt, durch den die Blattfeder 5 herausragt. Dieser Spalt kann durch eine, mit einer umlaufenden Anlagefläche 21a versehene Planflächendichtung 21 aus einem hochwertigen säurebeständigen Kunststoff verschlossenen werden, die über eine spaltförmige Öffnung 21b auf die Blattfeder 5 geschoben und durch das mit dem Tastelement 7 verbundenen Zwischenstück 15 leicht an der durch den Grundkörper 1 und dem Gehäuse 13 gemeinsam gebildeten Planfläche 22 angelegt werden kann.

Zur Befestigung der so ausgebildeten Messvorrichtung auf einen an sich bekannten, hier nicht dargestellten Messge äteträger, beispielsweise einem Messdorn, dient die durch das Gehäuse 13, die Zunge 6, den Grundkörper 1 und die Bodenplatte 11 geführte Befestigungsschraube 12. Diese kann in eine Gewindebohrung des Messgeräteträger eingeführt und festgezogen werden.

Es ist jedoch wesentlich vorteilhafter, der Befestigungsschraube ein in Fig. 6 und 7 als Einzelteil dargestelltes Klemmstück 23 zuzuordnen, das sich in eine Passbohrung des Messgeräteträgers einführen lässt und beim Anziehen der Befestigungsschraube 12 durch einen Vorsprung 23a zur einseitigen Anlage an die Messvorrichtung gebracht werden kann, dabei verkantet und sich so festsetzen lässt um die Messvorrichtung exakt positioniert und sicher auf den Messgeräteträger zu befestigen. Dieses Klemmstück 23 verfügt über Durchgangsbohrungen 23b für die zu den Induktionsspulen 3a, 3b führenden, hier nicht dargestellten Kabel, so dass die vorgenannte Passbohrung im Messgeräteträger gleichzeitig zur Kabeldurchführung dienen kann. Mit dem Lösen und einem geringen Druck auf die Befestigungsschraube 12 wird die Verkantung wieder aufgehoben und die Messvorrichtung kann leicht und einfach vom Messgeräteträger getrennt werden. Die Kabel sorgen dabei dafür, dass sich beim Festsetzen und Lösen der Messvorrichtung vom Messgeräteträger das Klemmstück 23 nicht verdrehen kann.

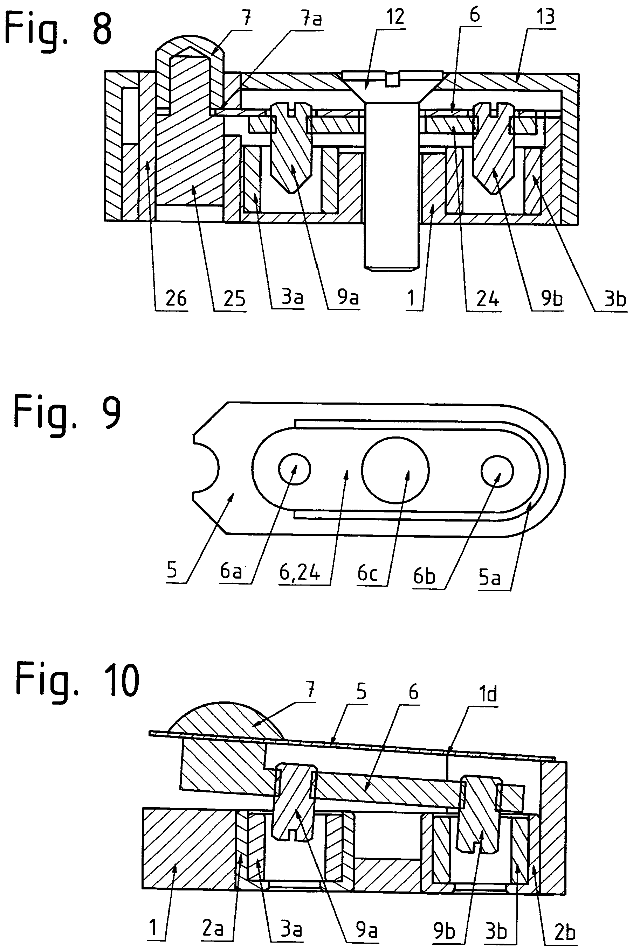

Das Ausführungsbeispiel der Figur 8 zeigt ein weitere erfindungsgemäße Messvorrichtung, bei der die Zunge 6 entsprechend den bisherigen Ausführungen durch die schmale, hufeisenförmige Ausnehmung 5a aus der Blattfeder 5 herausgearbeitet und damit einstückig mit ihr verbunden ist. Bei diesem Ausfügungsbeispiel ist der Zunge 6 jedoch eine Zungenleiste 24 zugeordnet, die mit ihr über die ganze Länge fest verbunden sein kann und in die die beiden Spulenkerne 9a, 9b eingesetzt sind. Damit wird die Zunge 6 wesentlich verstärkt und die Spulenkerne 9a, 9b erhalten eine größere Aufnahmelänge zugewiesen.

Diese Zungenleiste 24 kann sowohl, wie in Fig. 8 dargestellt, unter der direkt mit der Blattfeder 5 verbundenen Zunge 6 angebracht sein, als auch auf die Zunge 6 aufgesetzt werden. In beiden Fällen richtet sich, bei der Durchbiegung der Blattfeder 5, die Zunge 6 an ihrem freien Ende auf und nimmt dabei die nun mit ihr verbundene Zungenleiste 24 mit. Das Tastelement 7 ist bei diesem Ausführungsbeispiel nicht wie bei Fig. 1 und 2. mit der Blattfeder 5 direkt verbunden, sondern auf einem Stößel 25 befestigt, der in einer Buchse 26 geführt ist. Der Weg des Tastelementes 7 wird nur über eine dafür vorgesehene Stirnfläche 7a auf die Blattfeder 5 übertragen, die mit ihrer Vorspannung der Antastkraft entgegenwirkt.

Die Figur 9 zeigt die Blattfeder 5 mit der darauf befestigten Zungenleiste 24 von unten.

In Figur 10 ist eine Messvorrichtung dargestellt, deren Zunge 6 als abgesetzter Steg ausgebildet und unterhalb des Tastelementes 7 fest mit der Blattfeder 5 verbunden ist. Bei diesem Ausführungsbeispiel weist die Blattfeder 5 keinerlei Durchbrüche, Öffnungen oder Bohrungen auf. Dementsprechend ist es sinnvoll, wenn die Spulenkörper 2a, 2b bzw. die Bodenplatte 11 entsprechende Durchlassbohrungen für die Spulenkerne 9a, 9b aufweisen und die Spulenkerne 9a, 9b von der der Blattfeder 5 abgewandten Seite in die Zunge 6 einsetzbar sind. Während des Messvorgangs, d.h. bei der Durchbiegung der Blattfeder 5, wird die Zunge 6, wie bei allen vorhergehenden Ausführungsbeispielen auch, im Bereich des Spulenkerns 9a abgesenkt und im Bereich des Spulenkerns 9b angehoben. Der Freiraum zwischen der Zunge 6 und der Blattfeder 5 im Bereich des Spulenkerns 9b gewährleistet, dass der Spulenkern 9b niemals mit der Blattfeder 5 in Berührung kommt.

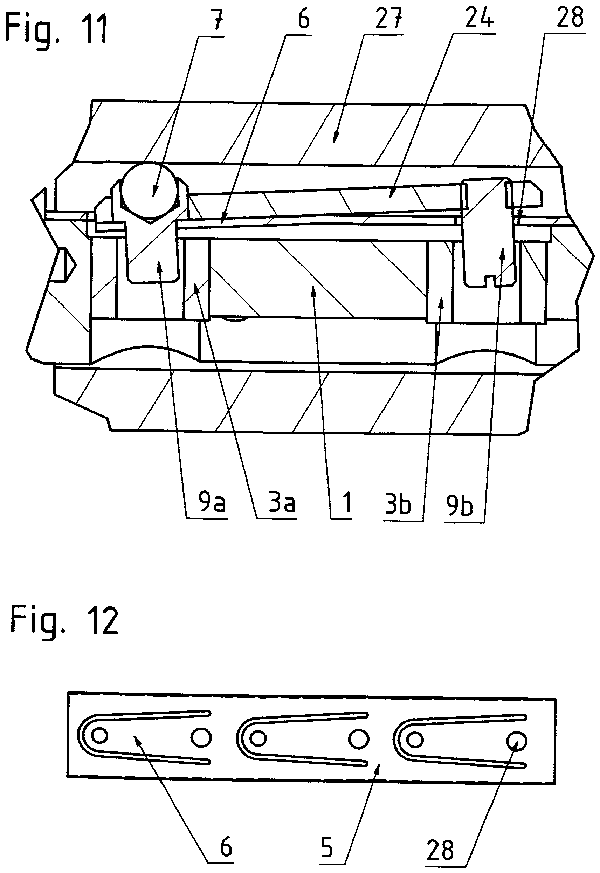

In Fig. 11 ist eine besonders klein bauende Vorrichtung in einer Messposition innerhalb eines Werkstücks 27 dargestellt. Wie dieses Ausführungsbeispiel zeigt, ist es auch möglich, am freien Ende der Zunge 6 das Tastelement 7, den Spulenkern 9a und eine Zungenleiste 24, ähnlich wie in Fig. 8 dargestellt, anzubringen. Hierbei ist jedoch die Zungenleiste 24 nur im Bereich des Tastelementes 7 und des Spulenkerns 9a mit der Zunge 6 verbunden, damit sich die Zungenleiste 24 während des Messvorgangs, d.h. bei Absenkung des freien Ende der Zunge 6 ungehindert aufrichten kann. Die Zunge 6 ist im Bereich des Spulenkerns 9b mit einer Öffnung 28 für dessen freien Durchlass versehen.

Die Fig. 12 zeigt eine Blattfeder 5 gemäß Fig. 11 mit den Ausnehmungen für drei derartige, hintereinander angeordnete Messvorrichtungen im Verbund. Dementsprechend ist auch jede andere geometrische Anordnung von mehreren Messvorrichtungen möglich. Eine solche Ausführung ist besonders vorteilhaft, wenn auf engsten Raum mehrere Messeinrichtungen untergebracht werden müssen, wie es bei der Kontrolle von Lage- und Formtoleranzen an Werkstücken oft der Fall ist.

### Bezugszahlenliste

- 1: Grundkörper
- 1a: Boden des Grundkörpers
- 1b: umlaufender Rand des Grundkörpers
- 1c: kreisförmige Aussparung am Grundkörper
- 1d: Endkante am Rand des Grundkörpers
- 2a: erster Spulenkörper
- 2b: zweiter Spulenkörper
- 3a: erste Induktionsspule
- 3b: zweite Induktionsspule
- 4: Messglied
- 5: Blattfeder
- 5a: hufeisenförmige Ausnehmung
- 5b: Stirnfläche am freien Ende der Blattfeder
- 6: Zunge
- 6a: Öffnung
- 6b: Öffnung
- 6c: Öffnung
- 7: Tastelement
- 7a: rückseitige Stirnfläche am Tastelemet
- 8: angesenkte Bohrung
- 9a: erster Spulenkern
- 9b: zweiter Spulenkern
- 10: Pfeil
- 11: Bodenplatte
- 12: Befestigungsschraube
- 13: Gehäuse
- 14: Justierblech
- 15: Zwischenstück
- 16: schlitzförmige Ausnehmung
- 16a: stirnseitige Fläche
- 17: Gewindebohrung
- 18: Klemmschraube
- 19: Spitze
- 20: Spalt
- 21: Planflächendichtung
- 21a: Anlagefläche der Planflächendichtung
- 21b: spaltförmige Öffnung
- 22: gemeinsame Planfläche
- 23: Klemmstück
- 23a: Vorsprung
- 23b: Durchgangsbohrung
- 24: Zungenleiste
- 25: Stößel
- 26: Buchse
- 27: Werkstück
- 28: Öffnung

- L1: Bogenlänge
- L2: Länge

## Patentansprüche

1. Vorrichtung zur Überprüfung der Maße eines mechanischen Werkstückes, bestehend aus einem einbaubaren und zwei mit Abstand voneinander angeordnete Induktionsspulen (3a, 3b) aufnehmenden Grundkörper (1) und einem bewegbaren und mit einem sich auf der zu messenden Oberfläche anlegbaren Tastelement (7) sowie mit zwei den Induktionsspulen (3a, 3b) zugeordneten Spulenkernen (9a, 9b) bestückten Messglied (4),
**dadurch gekennzeichnet,**
**dass** das Messglied (4) als eine sich über die beiden Induktionsspulen (3a, 3b) des Grundkörpers (1) erstreckende und die beiden Spulenkerne (9a, 9b) tragende Zunge (6) ausgebildet ist, die einseitig mit einer sich gleichfalls über den Grundkörper (1) erstreckenden und mit dem anderen Ende am Grundkörper (1) befestigten Blattfeder (5) verbunden ist.

2. Vorrichtung nach Anspruch 1,
**dadurch gekennzeichnet,**
**dass** dem freien Ende der Zunge (6) das Tastelement (7) zugeordnet und mit einer die Spulenkerne (9a,9b) aufnehmenden Zungenleiste (24) partiell verbunden ist.

3. Vorrichtung nach Anspruch 1 oder 2,
**dadurch gekennzeichnet,**
**dass** die Zunge (6) einstückig mit der Blattfeder (5) ausgebildet ist.

4. Vorrichtung nach einem der Anspruch 1 bis 3,
**dadurch gekennzeichnet,**
**dass** zwischen dem Grundkörper (1) und der Blattfeder (5) ein die Auflagelänge der Blattfeder (5) auf dem Grundkörper (1) einstellendes Justierblech (14) angeordnet ist.

5. Vorrichtung nach einem der Ansprüche 1 bis 4,
**dadurch gekennzeichnet,**
**dass** der das Messglied (4) mit den zwei Spulenkörpern (2a, 2b) und die zwei Induktionsspulen (3a, 3b) tragende Grundkörper (1) in einem Gehäuse (13) angeordnet ist.

6. Vorrichtung nach Anspruch 5,
**dadurch gekennzeichnet,**
**dass** das Gehäuse (13) eine durch das Messglied (4), den Grundkörper (1) und die Bodenplatte (11) geführte Befestigungsschraube (12) besitzt.

7. Vorrichtung nach Anspruch 6,
**dadurch gekennzeichnet,**
**dass** der Befestigungsschraube (12) ein Klemmstück (23) zugeordnet ist.

8. Vorrichtung nach einem der Ansprüche 1 bis 7,
**dadurch gekennzeichnet,**
**dass** die Blattfeder (5) über eine abdichtbare Öffnung (20) aus dem Gehäuse (13) herausgeführt ist.

9. Vorrichtung nach Anspruch 8,
**dadurch gekennzeichnet,**
**dass** das Tastelement (7) auf dem aus dem Gehäuse (13) herausragenden Teil der Blattfeder (5) über ein Zwischenstück (15) mit einer Klemmschraube (18) auswechselbar befestigt ist.

10. Vorrichtung nach Anspruch 9,
**dadurch gekennzeichnet,**
**dass** das Zwischenstück (15) über die Klemmschraube (18) vertikal und horizontal reproduzierbar mit der Blattfeder (5) verbunden ist.

## Claims

1. Device for checking the dimensions of a mechanical workpiece comprising an installable base body (1) housing two induction coils (3a, 3b) arranged at a distance from each other and a moveable probe element (7) mountable on the surface to be measured as well a measuring element (4) equipped with two coil cores (9a, 9b) assigned to the induction coils (3a, 3b),
**characterised in that**,
the measuring element (4) is configured as a guide (6) extending over the two induction coils (3a, 3b) of the base body (1) and supporting the two coil cores (9a, 9b), which is connected on one side to a leaf spring (5) also extending over the base body (1) and attached to the base body (1) with the other end.

2. Device according to Claim 1,
**characterised in that** the probe element (7) is assigned to the free end of the guide (6) and is partially connected to a guide rail (24) receiving the coil cores (9a, 9b).

3. Device according to Claim 1 or 2,
**characterised in that** the guide (6) is formed with the leaf spring (5) in single piece manner.

4. Device according to any one of Claims 1 to 3,
**characterised in that**
an adjusting plate (14) adjusting the supporting length of the leaf spring (5) on the base body (1) is arranged between the base body (1) and the leaf spring (5).

5. Device according to any one of Claims 1 to 4,
**characterised in that**
the base body (1) supporting the measuring element (4) with the two coil bodies (2a, 2b) and the two induction coils (3a, 3b) is arranged in a housing (13).

6. Device according to Claim 5,
**characterised in that**
the housing (13) has a fixing screw (12) passed through the measuring element (4), the base body (1) and the base plate (11).

7. Device according to Claim 6,
**characterised in that**
a clamping piece (23) is assigned to the fixing screw (12).

8. Device according to any one of Claims 1 to 7,
**characterised in that**
the leaf spring (5) passes out of the housing (13) via a sealable opening (20).

9. Device according to Claim 8,
**characterised in that**
the probe element (7) is removably fixed using a clamping screw (18) onto the part of the leaf spring (5) protruding out of the housing (13) by means of a connecting piece (15).

10. Device according to Claim 9,
**characterised in that**
the connecting piece (15) is connected to the leaf spring (5) in a vertically and horizontally reproducible manner by means of the clamping screw (18).

## Revendications

1. Dispositif servant à surveiller les dimensions d'une pièce mécanique, constitué d'un corps de base (1) pouvant être monté et logeant deux bobines à induction (3a, 3b) disposées à distance l'une de l'autre et d'un organe de mesure (4) pouvant être déplacé et équipé d'un élément sondeur (7) pouvant être placé sur la surface à mesurer et ainsi que de deux noyaux de bobine (9a, 9b) associés aux bobines à induction (3a, 3b),
**caractérisé en ce**
**que** l'organe de mesure (4) est réalisé sous la forme d'une languette (6) s'étendant sur les deux bobines à induction (3a, 3b) du corps de base (1) et supportant les deux noyaux de bobine (9a, 9b), laquelle languette est reliée d'un côté à un ressort à lames (5) s'étendant de la même manière au-dessus du corps de base (1) et fixé, par l'autre extrémité, au niveau du corps de base (1).

2. Dispositif selon la revendication 1,
**caractérisé en ce**
**que** l'élément sondeur (7) est associé à l'extrémité libre de la languette (6) et est relié en partie à une baguette de languette (24) logeant les noyaux de bobine (9a, 9b).

3. Dispositif selon la revendication 1 ou 2,
**caractérisé en ce**
**que** la languette (6) est réalisée d'un seul tenant avec le ressort à lames (5).

4. Dispositif selon l'une quelconque des revendications 1 à 3,
**caractérisé en ce**
**qu'**une tôle d'ajustement (14) réglant la longueur d'appui du ressort à lames (5) sur le corps de base (1) est disposée entre le corps de base (1) et le ressort à lames (5).

5. Dispositif selon l'une quelconque des revendications 1 à 4,
**caractérisé en ce**
**que** le corps de base (1) supportant l'organe de mesure (4) avec les deux corps de bobine (2a, 2b) et les deux bobines à induction (3a, 3b) est disposé dans un boîtier (13).

6. Dispositif selon la revendication 5,
**caractérisé en ce**
**que** le boîtier (13) possède une vis de fixation (12) guidée à travers l'organe de mesure (4), le corps de base (1) et la plaque de fond (11).

7. Dispositif selon la revendication 6,
**caractérisé en ce**
**qu'**une pièce de serrage (23) est associée à la vis de fixation (12).

8. Dispositif selon l'une quelconque des revendications 1 à 7,
**caractérisé en ce**
**que** le ressort à lames (5) est guidé hors du boîtier (13) en passant par une ouverture (20) pouvant être étanchéifiée.

9. Dispositif selon la revendication 8,
**caractérisé en ce**
**que** l'élément sondeur (7) est fixé de manière interchangeable avec une vis de serrage (18) sur la partie, dépassant hors du boîtier (13), du ressort à lame (5) par l'intermédiaire d'une pièce intermédiaire (15).

10. Dispositif selon la revendication 9,
**caractérisé en ce**
**que** la pièce intermédiaire (15) est reliée au ressort à lames (5) de manière reproductible verticalement et horizontalement par l'intermédiaire de la vis de serrage (18).
